# EUROPÄISCHE PATENTSCHRIFT

(11) **EP 0 791 138 B1**
(45) Veröffentlichungstag und Bekanntmachung des Hinweises auf die Patenterteilung: **15.03.2000**
(21) Anmeldenummer: 95938384.5
(22) Anmeldetag: 02.11.1995
(51) Int. Cl.: F04B 53/06, F16K 24/04

(54) **DOSIERPUMPE MIT ENTLÜFTUNGSEINRICHTUNG**
METERING PUMP WITH AN AIR-PURGE DEVICE
POMPE DE DOSAGE A SYSTEME DE PURGE

(30) Priorität: 09.11.1994 DE 4439962
(43) Veröffentlichungstag der Anmeldung: 27.08.1997
(73) Patentinhaber: LANG APPARATEBAU GMBH, 83313 Siegsdorf (DE)
(72) Erfinder: RUTZ, Klaus, D-83377 Vachendorf (DE)
(74) Vertreter: Wilk, Hans-Christof, Dr.
(86) Internationale Anmeldenummer: EP9504283
(87) Internationale Veröffentlichungsnummer: WO9615370

(56) Entgegenhaltungen:
- DE-B- 2 803 471
- DE-C- 945 801
- DE-C- 3 410 305
- DE-C- 3 631 984
- DE-C- 4 241 030
- FR-A- 2 330 883
- NL-A- 7 703 057

## Beschreibung

Die Erfindung bezieht sich auf eine Dosierpumpe zum dosierten Fördern von Flüssigkeiten aus einem Vorrat in eine Dosierleitung, mit einer pumpenabgabeseitig angeschlossenen Entlüftungseinrichtung, die von der unter Druck stehenden geförderten Flüssigkeit transportiertes Gas, insbesondere Luft, in einen den Flüssigkeitsdruck unterschreitenden Druck aufweisenden Entgasungsraum abzuscheiden und abzuführen gestattet, wobei die Entlüftungseinrichtung einen von der unter Druck stehenden Flüssigkeit auf seiner einen Seite beaufschlagten porösen Körper aufweist, dessen andere Seite unmittelbar an den Entgasungsraum angrenzt, und wobei der Entgasungsraum mit der Pumpenumgebung in Gasableitungsverbindung steht.

Beim Fördern und Dosieren von Flüssigkeiten ist zu beobachten, daß die Reproduzierbarkeit der Förderung und das Ansaugverhalten durch Ausgasen der Flüssigkeit stark gestört werden kann. In der zu fördernden Flüssigkeit befindliches Gas wird im Druckhub komprimiert und kann sich beim nachfolgenden Saughub wieder ausdehnen. Dementsprechend unterbleibt die Förderung der Flüssigkeit anteilig oder sogar insgesamt. Wenn die Dosierpumpe mit einem geringen Hubvolumen arbeitet, können bereits geringe Gasmengen zu erheblichen Dosierfehlern führen. Darüber hinaus kann Gas während des Pumpens in der Pumpkammer komprimiert und beim Ansaugen entspannt werden, so daß das Ansaugen und damit das Fördern der Flüssigkeit durch die Dosierpumpe beeinträchtigt wird. Es ist daher allgemein bekannt, Dosierpumpen mit einer Entlüftungseinrichtung zu versehen.

Aus der DE-A-34 10 305 ist eine Dosierpumpe der eingangs genannten Art bekannt. In der Entlüftungsleitung dieser Pumpe ist ein deren Querschnitt ausfüllender poröser Körper vorgesehen, der durch eine Stellschraube zusammengepreßt werden kann. Durch einen geeignet eingestellten Anpreßdruck soll bewirkt werden, daß während eines Druckhubs der Pumpe Luft durch den porösen Körper hindurch in die Entlüftungsleitung gepreßt, aber während eines Saughubes keine Luft aus der Entlüftungsleitung in die Druckleitung gesaugt wird: Bei einer kontinuierlichen Entlüftung ist der poröse Körper soweit zusammengedrückt, daß sowohl Luft als auch ein geringer Prozentsatz der Flüssigkeit hindurchtreten kann. Der poröse Körper ist daher nicht semipermeabel und nicht ausschließlich nur für Luft durchlässig ausgebildet.

Bei einer Betriebsweise mit periodischer Entlüftung wird der poröse Körper mittels der Stellschraube zunächst soweit zusammengedrückt, daß er die kegelförmig ausgebildete Stellschraube in ihrer am Austrittsende der Entlüftungsleitung anliegenden Abdichtungsstellung gleichsam als Dichtmittel unterstützt. Zur Entlüftung wird die Stellschraube dann soweit gelockert, daß Luft oder Flüssigkeit oder sowohl Luft als auch Flüssigkeit hindurchtreten können. In dem Moment, wenn die Flüssigkeit hindurchtritt, wird die Stellschraube wieder in ihre Verschlußstellung bewegt.

Aus der DE-A-945 801 ist eine automatische Entlüftungsvorrichtung bekannt, die mit einem porösen Körper arbeitet, welcher sowohl für Flüssigkeit als auch für Luft durchlässig ist. Der Durchgangswiderstand des porösen Körpers ist allerdings für Luft deutlich geringer als für Flüssigkeit.

Bei der Dosierpumpe nach der DE-A-36 31 984 ist zwar ein Rückschlagventil in der Entlüftungsleitung vorgesehen, aber eine zu dosierende aggressive Flüssigkeit kann bis an das Rückschlagventil vordringen und dort zu Korrosionsschäden führen.

Aus der DE-A-4 241 030 ist eine weitere Dosierpumpe mit einer Entlüftungseinrichtung bekannt. Die Entlüftungseinrichtung weist ein Entlüftungsventil auf, das zwischen einem Druckventil der Pumpenkammer der Dosierpumpe und der Pumpenabgabeseite angeordnet ist, die ein zu einer Dosierleitung führendes Druckventil aufweist. Das Entlüftungsventil öffnet beim Saughub und schließt beim Druckhub. Während des Saughubs, bei dem das Druckventil geschlossen ist, kann Gas durch das geöffnete Entlüftungsventil entweichen. Diese Dosierpumpe hat sich im Betrieb bewährt. Ihr Einsatz bei aggressiven oder sensiblen Flüssigkeiten kann jedoch zu Schwierigkeiten insbesondere mit den beweglichen Ventilteilen führen.

Ein Infusionsgerät mit einer semipermeablen Membran ist aus der FR-A-2 330 883 bekannt. Mittels einer Spritze können Pump- und Saughübe ausgeführt werden. Das aus dem medizinischen Bereich bekannte Infusionsgerät arbeitet mit einem langsam strömenden Flüssigkeitsstrom, bei welchem das Gas über eine Zuführleitung zum Vorratsbehälter, aber nicht über eine separate Entlüftungsleitung, abgeführt wird. Ein separater Entgasungsraum wie bei der Dosierpumpe der eingangs genannten Art ist nicht vorhanden.

Demgegenüber liegt der Erfindung die Aufgabe zugrunde, eine Dosierpumpe mit den eingangs genannten Merkmalen so zu verbessern, daß ihre Entlüftungseinrichtung die erforderliche Entgasungsfunktion ohne Einsatz von Bauteilen erfüllt, wie beispielsweise bewegliche Ventilteile, deren Funktion von den mehr oder weniger aggressiven Eigenschaften der zu fördernden Flüssigkeit abhängig ist.

Diese Aufgabe wird erfindungsgemäß dadurch gelöst, daß der poröse Körper als semipermeable Membran ausgebildet ist.

Für die Erfindung ist von Bedeutung, daß eine semipermeable Membran zum Einsatz kommt, die die zu fördernde Flüssigkeit von dem Entgasungsraum fortwährend wirksam trennt. Diese semipermeable Membran ist also in der Lage, die zu fördernde Flüssigkeit wie eine Leitungswand weiterzuleiten, weil sie ihr gegenüber ein undurchdringliches Hindernis darstellt. Das von der Flüssigkeit transportierte Gas kann jedoch durch die Membran hindurchdiffundieren, so daß eine Abtrennung der Gasphase erfolgt. Die semipermeable Membran kann druck- und chemiebeständig ausgebildet werden, so daß aggressive Eigenschaften der unter Druck stehenden, zu fördernden Flüssigkeit keinen Einfluß auf die Funktion der Membran haben. Die mit dieser Membran ausgebildete Entlüftungseinrichtung bildet für die Flüssigkeit einen völlig abgeschlossenen Bereich zwischen der Dosierpumpe und der Dosierleitung. Es sind keine von der Pumpfrequenz abhängig wirkenden Einrichtungen erforderlich. Die Membran wirkt vielmehr fortwährend, auch während des Druckhubs der Dosierpumpe, was im Sinne einer möglichst wirkungsvollen Entgasung der zu fördernden Flüssigkeit von Vorteil ist. Die Membran gestattet außerdem eine erhebliche konstruktive Vereinfachung des Bereichs zwischen Dosierpumpe und Dosierleitung, vor allem wegen der Verringerung der Anzahl der erforderlichen Bauteile und des Einsatzes solcher Bauteile, die keine Abdichtungs- und Dauerhaltbarkeitsprobleme aufwerfen, wie das bei den bekannten Entlüftungseinrichtungen mit Ventilkonstruktionen der Fall ist. Die semipermeable Membran kann ohne weiteres so druckfest gestaltet und eingebaut werden, daß eine Beeinträchtigung der Fördermenge durch elastisches Verhalten der Membran ausgeschlossen ist, jedenfalls aber in vorbestimmten, tolerierbaren Grenzen gehalten werden kann. Für die Wirksamkeit der Entlüftungseinrichtung wird vorausgesetzt, daß die Gasdurchlaßrate der semipermeablen Membran von einem Druckunterschied auf beiden Seiten dieser Membran abhängt. Der Flüssigkeitsdruck soll also größer sein, als der im Entgasungsraum herrschende Druck. Falls jedoch nur eine geringe Entgasungsrate erforderlich ist, kann es durchaus sein, daß der im Entgasungsraum herrschende Druck praktisch gleich dem Flüssigkeitsdruck der geförderten Flüssigkeit ist.

In vielen Fällen erhalten die zu dosierenden Flüssigkeiten hydrophobe Verbindungen oder Verbindungen mit zumindest hydrophoben Anteilen, zum Beispiel Tenside. In diesem Fall ist es vorteilhaft, wenn die Membran oliophob ist, um eine Verblockung der feinen Membranporen mit der zu dosierenden Flüssigkeit zu vermeiden.

Um die Trennungseigenschaften der semipermeablen Membran optimal ausnutzen zu können, um also eine möglichst hohe Gasrate zu erreichen, kann die Dosierpumpe so ausgebildet werden, daß der Entlüftungsdruck des Entgasungsraums fortwährend in vorbestimmtem Ausmaß niedriger als der Druck der geförderten Flüssigkeit ist. Der dadurch gegebene Diffusionsdruckgradient bewirkt die gewünschte starke Entgasung während der gesamten Förderzeit im durch die Druckdifferenz vorgegebenen Umfang. Dementsprechend ergibt sich eine hohe Gasabscheidungsrate. Falls diese nicht erforderlich ist, kann die hohe Wirksamkeit der Entlüftungseinrichtung auch dazu benutzt werden, die Verweildauer der Flüssigkeit in der Entlüftungseinrichtung zu verkürzen bzw. entsprechend die Durchsatzmenge des Dosiersystems zu vergrößern.

Vorzugsweise ist der Entgasungsraum ein gasgefüllter Raum. Das von der semipermeablen Membran durchgelassene Gas kann sich ohne weiteres mit den Gas des Entgasungsraums mischen und aus diesem entweichen oder abgepumpt werden.

Ein selbsttätiges Entweichen des von der semipermeablen Membran durchgelassenen Gases ist ohne weiteres möglich, wenn der Entgasungsraum Atmosphärendruck aufweist. Es ist dann auch möglich, die Dosierpumpe so auszubilden, daß der Entgasungsraum mit der Pumpenumgebung in direkter Gasableitungsverbindung steht. In diesem Fall wird kein weiteres mechanisches Mittel benötigt, um das Gas aus dem Entgasungsraum zu entfernen.

Es kann jedoch wünschenswert sein, beispielsweise um Schwankungen des Atmosphärendrucks auf das Entgasungsverhalten der Entlüftungseinrichtung und damit auf den Gasgehalt der zu dosierenden Flüssigkeit auszuschließen, daß der Entgasungsraum und die Pumpenumgebung nicht in direkter Druckverbindung stehen sollen. In diesem Fall wird die Dosierpumpe so ausgebildet, daß der Entgasungsraum mit der Pumpenumgebung über ein ein Eindringen von Luft verhinderndes Sperrelement in Gasableitungsverbindung steht. Das Sperrelement gestattet im Rahmen der vorgesehenen Auslegung der Entlüftungseinrichtung ein Abscheiden von aus der Flüssigkeit herrührendem Gas, verhindert jedoch einen Gasstrom in entgegengesetzter Richtung.

Eine einfache konstruktive Ausgestaltung der Dosierpumpe zum Verhindern von Eindringen von Luft in den Entgasungsraum wird dadurch erreicht, daß das Sperrelement ein Rückschlagventil oder eine Sperrflüssigkeit ist. Das Rückschlagventil kann einen sehr geringen Ansprechdruck haben, der sich vom Atmosphärendruck nur wenig unterscheidet. Die Sperrflüssigkeit kann in eine Vorrichtung nach Art eines Siphons eingesetzt werden.

Es ist ohne weiteres möglich, die Entlüftungseinrichtung so auszubilden, daß sie in Verbindung mit bereits in Betrieb befindlichen Dosierpumpen eingesetzt werden kann, also in gewisser räumlicher Trennung dazu. Das hat den Vorteil, daß die alte Dosierpumpe weiterverwendet und die neue Entlüftungseinrichtung bedarfsweise auch ausgetauscht werden kann, beispielsweise gegen eine andere, einen anderen Wirkungsbereich aufweisende Entlüftungseinrichtung oder zum Zwecke der Wartung. Es kann aber auch vorteilhaft sein, die Dosierpumpe so auszubilden, daß die Entlüftungseinrichtung mit dem Pumpenkopf der Dosierpumpe eine Baueinheit bildet. Dabei ergeben sich Vorteile im Sinne einer wenig raumaufwendigen Gestaltung. Auch der insgesamt erforderliche Werkstoffeinsatz kann verringert werden. Die Entlüftungseinrichtung ist stets optimal auf die Funktion der Dosierpumpe abgestimmt.

Im Sinne einer weiteren Integration ist es möglich, die Dosierpumpe so auszubilden, daß die Entlüftungseinrichtung bei Einsatz einer Membranpumpe eine Baueinheit mit deren Pumpendruckventil bildet.

Ein Ausgasen der zu fördernden Flüssigkeit kann auch bereits pumpensaugseitig erfolgen. Pumpensaugseitig fällt Gas auch dann an, wenn der in einem Vorratsbehälter befindliche Vorrat unbeachtet zu Ende geht, oder wenn ein Saugschlauch an einen neuen, gefüllten Vorratsbehälter angeschlossen wird, falls dabei nicht eine Entlüftung erfolgt. Es kann daher von Vorteil sein, eine Dosierpumpe so auszubilden, daß ihr bei unter Druck stehendem Flüssigkeitsvorrat saugseitig eine Entlüftungseinrichtung vorgeordnet ist, die eine von dem zu fördernden Vorrat beaufschlagte semipermeable Membran hat, deren andere Seite unmittelbar an einen den Druck des Flüssigkeitsvorrats unterschreitenden Druck aufweisenden Entgasungsraum angrenzt. Eine solche Ausgestaltung wird insbesondere dann erfolgen, wenn die Dosierpumpe im übrigen wie oben vorbeschrieben ausgebildet ist, vorzugsweise also die oben und eingangs genannten Merkmale aufweist. Des weiteren kann die Entlüftungseinrichtung vorteilhafterweise dann eingesetzt werden, wenn der Flüssigkeitsvorrat saugseitig bereits unter Druck steht. Der saugseitige Druck ist dem Entgasen der Flüssigkeit mit Hilfe der semipermeablen Membran dienlich. Derartiger Druck der zu fördernden Flüssigkeit tritt bereits dadurch unter Umständen in erheblichem Maß auf, daß der Flüssigkeitsvorrat auf einen höheren Niveau steht, als die Dosierpumpe. Sofern die Einsatzverhältnisse der Entlüftungseinrichtung auf der Saugseite der Dosierpumpe so vorteilhaft sind, daß eine praktisch vollständige Entgasung erreicht wird und daß im Bereich der Dosierpumpe bis zur Dosierleitung ein weiteres Ausgasen nicht oder nicht in wesentlichem Umfang befürchtet werden muß, kann eine allein auf der Saugseite der Dosierpumpe wirkende Entlüftungseinrichtung mit semipermeabler Membran ausreichend sein.

Die Erfindung wird anhand von in der Zeichnung dargestellten Ausführungsbeispielen näher erläutert. Es zeigt:
- Fig. 1: eine schematische Darstellung einer Dosierpumpe mit Entlüftungseinrichtung, und
- Fig.2: eine schematische Darstellung einer weiteren speziellen Dosierpumpe mit Entlüftungseinrichtung.

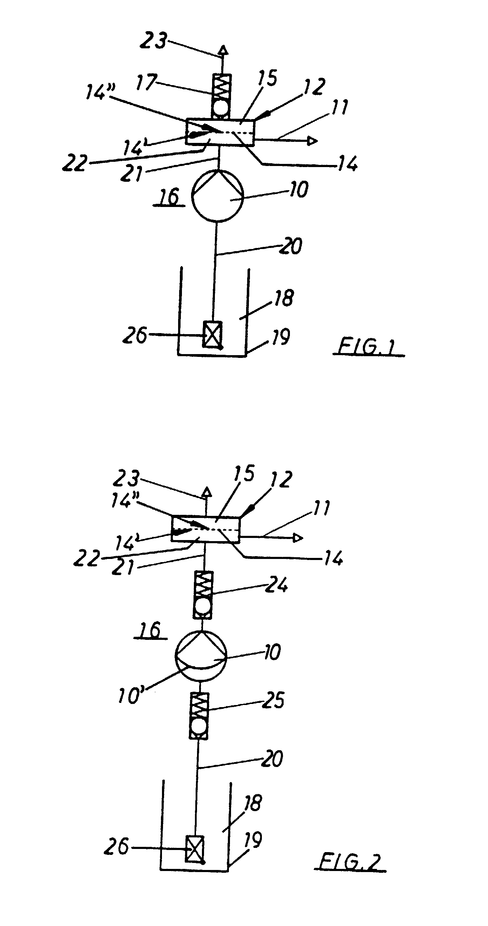

Die in Fig.1 dargestellte Dosierpumpe 10 dient dem dosierten Fördern von Flüssigkeiten aus einem Vorrat 18, der in einem Flüssigkeitsbehälter 19 untergebracht ist. Der Flüssigkeitsbehälter 19 ist beispielsweise ein Faß, in das eine Saugleitung 20 der Dosierpumpe 10 hineingesteckt ist, die an ihrem Ende einen Filter 21 aufweist, um das Eindringen von unerwünschten Partikeln zu verhindern.

Die Dosierpumpe 10 kann konstruktiv unterschiedlich ausgestaltet sein. Häufig wird eine Membranpumpe eingesetzt, wie sie allgemein bekannt ist. Es kann aber auch eine Kolbenpumpe eingesetzt werden. Auch der Einsatz von Kreiselpumpen oder von Zahnradpumpen ist möglich.

Die Dosierpumpe fördert die Flüssigkeit in eine Dosierleitung 11, welche die geförderte Flüssigkeit dem jeweiligen Verbraucher zuleitet. In der Dosierleitung 11 ist vielfach ein nicht dargestelltes Druckhalteventil angeordnet, welches als Rückschlagventil ausgebildet ist und einerseits der präzisen Dosierung der geförderten Flüssigkeit dient, andererseits die Dosierleitung bis zur Dosierpumpe 10 gefüllt hält, also ein Abtröpfeln der Flüssigkeit zum Verbraucher hin vermeidet, und außerdem dafür sorgt, daß ein Rückfluß vom Verbraucher zur Dosierpumpe hin in den durch das Druckhalteventil dargestellten Bereich ausgeschlossen wird.

Es kann also davon ausgegangen werden, daß in der Druckleitung 11 stets ein vorbestimmter Druck herrscht, wenn die Dosierpumpe 10 arbeitet oder arbeitsbereit ist.

Pumpenabgabeseitig ist eine Entlüftungseinrichtung 12 angeordnet, die in ihrer gegenständlichen Ausführung ein zweiteiliges Gehäuse sein kann, dessen Teile zwischen sich eine semipermeable Membran 14 mit nicht dargestellten Flanschen einschließen. Jede Seite 14', 14" der semipermeablen Membran 14 ist einem Gehäuseteil zugewendet. Das dosierpumpenseitige Gehäuseteil ist an eine Druckleitung 21 angeschlossen, durch die von der Dosierpumpe 10 geförderte Flüssigkeit in einen Druckraum 22 der Entlüftungseinrichtung 12 geleitet wird. Von diesem Raum 22 aus geht die Dosierleitung 11 ab.

Dem Druckraum 22 gegenüber, auf der anderen Seite 14" der Membran 14, befindet sich ein Entgasungsraum 15, der von dem pumpenabgewendeten Gehäuseteil der Entlüftungseinrichtung 12 gebildet ist. Der Entgasungsraum 15 ist an eine Gasableitung 23 angeschlossen.

Aus dem Vorrat 18 von der Dosierpumpe 10 geförderte Flüssigkeit gelangt in den Druckraum 22 und etwa mitgefördertes Gas diffundiert durch die semipermeable Membran 14 hindurch in den Entgasungsraum 15. Aufgrund der Druckdifferenz auf beiden Seiten 14',14" der Membran 14 erfolgt eine Gasdiffusion durch die Membran 14 hindurch. Das im Entgasungsraum 15 anfallende Gas kann durch die Gasableitung 23 in die Umgebung der Dosierpumpe abströmen. Es ist nicht erforderlich, die Gasableitung 23 zurück zum Vorratsbehälter 19 zu führen, weil keine Flüssigkeit in den Entgasungsraum gelangt, die zurückgeleitet werden müßte, wie es bei mit Ventilen ausgestatteten Entlüftungseinrichtungen der Fall sein kann, oder wie es bei Entlüftungseinrichtungen mit Leckage der Fall ist, bei denen durch permanentes Überströmen einer nicht reproduzierbaren Leckagemenge die Gasblasen aus der Dosierleitung abgeleitet werden müssen, wobei sich druck-, temperatur- und viskositätsabhängige und somit schwankende Leckagemengen ergeben.

Fig.1 zeigt ein in die Gasableitung 23 eingebautes Rückschlagventil 17. Es wird durch einen Druck geöffnet, der sich im Entgasungsraum 15 infolge der Diffusion von Gas durch die Membran 14 hindurch aufbaut. Zwischen dem Druckraum 22 und dem Entgasungsraum 15 ergeben sich infolgedessen vorbestimmte Druckdifferenzen, die den Entgasungsvorgang in auch rechnerisch vorbestimmbarer Weise zu beherrschen gestatten. Mit dem Rückschlagventil 17 wird erreicht, daß ein Eindringen von Luft aus der Pumpenumgebung 16 in den Entgasungsraum 15 verhindert wird. Ein solches Eindringen von Luft ist denkbar, weil der Druck der geförderten Flüssigkeit pumpenabgabeseitig schwellend ansteigt und wieder absinkt. Beim Absinken könnte Luft in den Entgasungsraum eindringen, was durch das als Sperrelement wirkende Rückschlagventil 17 verhindert wird. Als Rückschlagventil 17 wird beispielsweise ein Kugel- oder ein Lippenventil eingesetzt.

In Fig.2 ist eine spezielle Dosierpumpe 10 dargestellt, nämlich eine Membranpumpe, und zusätzlich finden sich die für solche Pumpen üblicherweise eingesetzten Pumpenventile, nämlich pumpenabgabeseitig ein Druckventil 24 und pumpenansaugseitig ein Saugventil 25. Die in bekannter Weise angetriebene Fördermembran 10' saugt bei ihrem einen Hub Flüssigkeit mit der Saugleitung aus dem Vorrat 18, wobei das Druckventil 24 sperrt. Bei einer Bewegung der Fördermembran 10' in ihre andere Richtung sperrt das Saugventil 25 und Flüssigkeit wird durch das Druckventil 23 in die Druckleitung 11 gefördert.

## Patentansprüche

1. Dosierpumpe (10) zum dosierten Fördern von Flüssigkeiten aus einem Vorrat (18) in eine Dosierleitung (11), mit einer pumpenabgabeseitig angeschlossenen Entlüftungseinrichtung (12), die von der unter Druck stehenden geförderten Flüssigkeit transportiertes Gas, insbesondere Luft, in einen den Flüssigkeitsdruck unterschreitenden Druck aufweisenden Entgasungsraum (15) abzuscheiden und abzuführen gestattet, wobei die Entlüftungseinrichtung (12) einen von der unter Druck stehenden Flüssigkeit auf seiner einen Seite (14') beaufschlagten porösen Körper (14) aufweist, dessen andere Seite (14") unmittelbar an den Entgasungsraum (15) angrenzt, und wobei der Entgasungsraum (15) mit der Pumpenumgebung (16) in Gasableitungsverbindung steht,
**dadurch gekennzeichnet**,
daß der poröse Körper als semipermeable Membran (14) ausgebildet ist.

2. Dosierpumpe nach Anspruch 1,
**dadurch gekennzeichnet**,
daß die Membran (14) oliophob ist.

3. Dosierpumpe nach Anspruch 1 oder 2,
**dadurch gekennzeichnet**,
daß der Entlüftungsdruck des Entgasungsraums (15) fortwährend in vorbestimmtem Ausmaß niedriger als der Druck der geförderten Flüssigkeit ist.

4. Dosierpumpe nach einem der Ansprüche 1 bis 3,
**dadurch gekennzeichnet**,
daß der Entgasungsraum (15) ein gasgefüllter Raum ist.

5. Dosierpumpe nach einem der Ansprüche 1 bis 4,
**dadurch gekennzeichnet**,
daß der Entgasungsraum (15) Atmosphärendruck aufweist.

6. Dosierpumpe nach einem der Ansprüche 1 bis 5,
**dadurch gekennzeichnet**,
daß der Entgasungsraum (15) mit der Pumpenumgebung (16) über ein ein Eindringen von Luft verhinderndes Sperrelement (17) in Gasableitungsverbindung steht.

7. Dosierpumpe nach Anspruch 6,
**dadurch gekennzeichnet**,
daß das Sperrelement ein Rückschlagventil (17) oder eine Sperrflüssigkeit ist.

8. Dosierpumpe nach einem der Ansprüche 1 bis 7,
**dadurch gekennzeichnet**,
daß die Entlüftungseinrichtung (12) mit dem Pumpenkopf der Dosierpumpe (10) eine Baueinheit bildet.

9. Dosierpumpe nach einem der Ansprüche 1 bis 8,
**dadurch gekennzeichnet**,
daß die Entlüftungseinrichtung (12) bei Einsatz einer Membranpumpe eine Baueinheit mit deren Pumpendruckventil bildet.

10. Dosierpumpe nach einem der Ansprüche 1 bis 9,
**dadurch gekennzeichnet**,
daß ihr bei unter Druck stehendem Flüssigkeitsvorrat saugseitig eine Entlüftungseinrichtung vorgeordnet ist, die eine von dem zu fördernden Vorrat beaufschlagte semipermeable Membran hat, deren andere Seite unmittelbar an einen den Druck des Flüssigkeitsvorrats unterschreitenden Druck aufweisenden Entgasungsraum angrenzt.

## Claims

1. A metering pump (10) for the measured delivery of liquids from a supply (18) into a metering pipe (11), comprising a venting system (12) connected to the output side of the pump to enable gas, more particularly air, transported by the pressurized liquid being pumped to be removed in a degassing space (15) where the pressure is below the liquid pressure and discharged, the venting system (12) comprising a porous element (14) which, on one side (14'), is exposed to the pressurized liquid and which, on its other side (14"), immediately adjoins the degassing space (15) and the degassing space (15) being in gas discharge communication with the environment (16) around the pump, characterized in that the porous element is a semipermeable membrane (14).

2. A metering pump as claimed in claim 1, characterized in that the membrane (14) is oleophobic.

3. A metering pump as claimed in claim 1 or 2, characterized in that the venting pressure of the degassing space (15) is permanently lower to a predetermined extent than the pressure of the pumped liquid.

4. A metering pump as claimed in any of claims 1 to 3, characterized in that the degassing space (15) is a gas-filled space.

5. A metering pump as claimed in any of claims 1 to 4, characterized in that the degassing space (15) is at atmospheric pressure.

6. A metering pump as claimed in any of claims 1 to 5, characterized in that the degassing space (15) is in gas discharge communication with the environment (16) around the pump through a shut-off element (17) preventing the penetration of air

7. A metering pump as claimed in claim 6, characterized in that the shut-off element is a nonreturn valve (17) or a barrier liquid for preventing the penetration of air.

8. A metering pump as claimed in any of claims 1 to 7, characterized in that the venting system (12) forms an integral unit with the pump head of the metering pump (10).

9. A metering pump as claimed in any of claims 1 to 8, characterized in that, where a diaphragm pump is used, the venting system (12) forms an integral unit with its pump pressure valve.

10. A metering pump as claimed in any of claims 1 to 9, characterized in that, where the supply of liquid is under pressure, the metering pump is preceded on the suction side by a venting system comprising a semipermeable membrane which is exposed to the supply to be delivered and which, on its other side, immediately adjoins a degassing space where the pressure is below the pressure of the liquid supply.

## Revendications

1. Pompe de dosage (10) pour débiter de manière dosée un liquide d'une réserve (18) vers une conduite de dosage (11) comprenant :
- une installation de dégazage (12) reliée à la sortie de la pompe, cette installation séparant et évacuant le gaz transporté par le liquide débité sous pression, notamment de l'air dans une chambre de dégazage (15) sous une pression inférieure à la pression du liquide,
- l'installation de dégazage (12) ayant un corps poreux (14) dont un côté (14') est exposé au liquide sous pression et dont l'autre côté (14") est directement adjacent à la chambre de dégazage (15) et,
- la chambre de dégazage (15) communique avec l'environnement de la pompe (16) par une conduite de gaz,
caractérisée en ce que
le corps poreux est une membrane semi-perméable (14).

2. Pompe de dosage selon la revendication 1,
caractérisée en ce que
la membrane (14) est oligophobe.

3. Pompe de dosage selon la revendication 1 ou 2,
caractérisée en ce que
la pression de dégazage de la chambre de dégazage (15) est inférieure en permanence d'une valeur prédéterminée à la pression du liquide débité.

4. Pompe de dosage selon l'une des revendications 1 à 3,
caractérisée en ce que
la chambre de dégazage (15) est une chambre remplie de gaz.

5. Pompe de dosage selon l'une des revendications 1 à 4,
caractérisée en ce que
la chambre de dégazage (15) est à la pression atmosphérique.

6. Pompe de dosage selon l'une des revendications 1 à 5,
caractérisée en ce que
la chambre de dégazage (15) communique avec l'environnement de la pompe (16) par la conduite de dégazage munie d'un élément de blocage (17) interdisant la pénétration de l'air.

7. Pompe de dosage selon la revendication 6,
caractérisée en ce que
l'élément de blocage est un clapet antiretour (17) ou une barrière à liquide.

8. Pompe de dosage selon l'une des revendications 1 à 7,
caractérisée en ce que
l'installation de dégazage (12) forme une unité avec la tête de pompe de dosage (10).

9. Pompe de dosage selon l'une des revendications 1 à 8,
caractérisée en ce que
l'installation de dégazage (12) forme une unité de construction avec la soupape de pression de la pompe dans le cas d'utilisation d'une pompe à membrane.

10. Pompe de dosage selon l'une des revendications 1 à 9,
caractérisée en ce que
pour sa réserve de liquide sous pression, du côté de l'aspiration, il est prévu une installation de dégazage munie d'une membrane semi-perméable sollicitée par la réserve à débiter et dont l'autre côté est adjacent directement à la chambre de dégazage qui est à une pression inférieure à la pression de la réserve de liquide.
